(19)

**Europäisches Patentamt**
**European Patent Office**
**Office européen des brevets**

(11) **EP 4 124 983 A1**

(12) **EUROPEAN PATENT APPLICATION**

(43) Date of publication:
**01.02.2023 Bulletin 2023/05**

(21) Application number: **21188535.5**

(22) Date of filing: **29.07.2021**

(51) International Patent Classification (IPC):
**G06F 21/62** *(2013.01)*   **G06F 21/74** *(2013.01)*

(52) Cooperative Patent Classification (CPC):
**G06F 21/6245; G06F 21/74**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Privacy Chambers**
**33300 Bordeaux (FR)**

(72) Inventors:
• **RUIZ, Nicolas**
  **95110 SANNOIS (FR)**
• **MELOUK, Amine**
  **33300 BORDEAUX (FR)**

(74) Representative: **Aquinov**
**Allée de la Forestière**
**33750 Beychac et Caillau (FR)**

(54) **METHOD FOR EXECUTING A REQUEST ON A DATA SET**

(57)    The invention concerns a computer-implemented method for executing a request (Ri) comprising at least one operation (OP) to be computed on a data set (Y) contained in a database (22, DB), the data set being stored in a secure enclave (2); the request being emitted from a client (CL), comprising the following steps: (S23) In response to receiving the request, determining a privacy level (Li) of the request results; (S24) Determining an analysis key (K') based on said privacy level and providing the analysis key to the secure enclave; (S26) Encrypting, inside the secure enclave, said data set with said analysis key; (S27) Computing, inside the secure enclave, said at least one operation on said encrypted data set; (S28) Providing to the client the results (R'i) of the operation.

[Figure 5]

EP 4 124 983 A1

## Description

The present invention relates to the field of statistical disclosure control. More particularly, the invention relates to a method for executing a request on a data set stored in a database; which ensures that only an appropriate level of information leaks from the results of the request, considering the needs of the client that has issued the request.

Data on individuals are increasingly gathered and stored in large and complex data sets. Considering the amount of information contained in these data, they represent a great wealth. These data sets can be processed with statistical analysis tools to infer models and to perform predictions in many technological and business fields.

However, legal requirements and privacy policy tend to slow, or even block, the exploitation of these data sets. Data are collected by a data provider from individuals which have gave their consent for the exploitation of these data and which expect the data provider in charge of the storing of these data to ensure their privacy. Nonetheless, experience has shown that, even with strong database protection, breach in database happen and data can leak.

Beyond the needs to prevent any unauthorized direct access to personal information, there is also a need for preventing identification or re-identification of people from a data set, whether in it be in the case of a data breach or in the case of an authorized access with illegitimate purpose. A risk of disclosure may occur when enough information is provided to a user consulting the data set to infer all or part of the identity of an individual.

Many disclosure control or anonymization techniques have been created to prevent such identification, as data masking, data swapping or noise addition. The goal of each of these techniques is to achieve differential privacy, with altering the original data set in some way that reduces disclosure risk while providing to the user consulting the data set enough information to perform legitimate tasks.

Although these solutions mitigate a risk of disclosure, they imply that the anonymization of the data set must be achieved by the data provider, before exchanging data to a user that issued a request. This creates a variety of challenges.

Firstly, the data provider might supply data to many different users, from a same data set. However, these users can have different needs and can be authorized to access to different levels of information, considering the privacy policy regulating each user and considering to what extent individuals have consent to the exploitation of their data. Moreover, privacy policies or regulations, such as GDPR (General Data Protection Regulation) or CCPA (California Consumer Privacy Act), require company accessing to individual data to be compliant, with a risk of fine to non-compliant company. This means that the data provider shall manage the amount of information from the data set that can be inferred from the data he will exchange with each user, to ensure individual privacy and mitigate user non-compliance risk.

Secondly, with these solutions, the data provider can access to the original data set. There is therefore a risk for individuals that the data provider performs illegitimate tasks on this data set or provider cleartext data to unauthorized users. Moreover, the data provider has also to mitigate his own risk of non-compliance regarding privacy policy and regulations.

Considering the above, there is therefore a need for a method for exchanging data between a data provider and a user, which ensures that only an appropriate level of information shall be provided to the user, considering the user's needs and the regulations and policy to which the user is subject.

The object of the present invention is to answer to this need.

For this purpose, the subject of the invention is a computer-implemented method for executing a request comprising at least one operation to be computed on a data set contained in a database, the data set being stored in a secure enclave; the request being emitted from a client, comprising the following steps:

a. In response to receiving the request, determining a privacy level of the request results;
b. Determining an analysis key based on said privacy level and providing the analysis key to the secure enclave;
c. Encrypting, inside the secure enclave, said data set with said analysis key;
d. Computing, inside the secure enclave, said at least one operation on said encrypted data set;
e. Providing to the client the results of the operation.

According to the invention, a data set containing individual data is stored in a secure enclave. This data set might be stored in a data provider's database being external to the secure enclave, the data set being therefore supplied by the data provider to the secure enclave. As a variant, the data set might be stored in a data provider's database stored in the secure enclave. A client or a user that requests an operation to be executed on this data set will send his request to a specific software interface of the enclave, also known as a rules engine. The rules engine will define a privacy level, specifying which amount of information the client can access, and will then determine an analysis key specifically associated to this privacy level. The data set will then be ciphered or encrypted with this analysis key, being therefore altered in some way that reduces disclosure risk while providing the appropriate amount of information to be granted according to the privacy level defined by the rules engine. The operation requested by the client will then be computed on the encrypted data set, inside the secure enclave, and only the results of this operation will be outputted to the client. It has no be noticed that there is no decryption of the encrypted data set before computing the operation, the operation being directly computed on the encrypted data set. Moreover, the analysis key is generated outside the secure enclave, independently of the data set, preventing therefore the provider of the analysis to perform an illegitimate task on the data set.

In the context of the present specification, unless expressly provided otherwise, a "computer" may refer, but is not limited to, a desktop computer, a laptop computer, a server, a media player (such as an MP3 player), an appliance, a subnotebook/netbook, a tablet computer, a smartphone, a cellular telephone, a piece of testing equipment, a network appliance, a set-top box, a personal digital assistant (PDA), a toy, a controller, a digital signal processor, a game console, a computational engine within an appliance, a consumer-electronic device, a portable computing device, a personal organizer, and/or another electronic device, and/or any combination thereof appropriate to the relevant task at hand.

In the context of the present specification, unless expressly provided otherwise, the expression "memory" is intended to include random access memory (RAM) as dynamic random-access memory (DRAM) or static random-access memory (SRAM), read-only memory (ROM), and/or other types of memory.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, a "secure enclave" is a computer subsystem isolated from the rest of the computer except for a carefully controlled interface, and that performs security services for other components in the computer and that securely communicates with other subsystems in the computer. Secure enclave may include comprising at least a secure enclave processor, a secure enclave memory, one or more security peripherals, and/or other components. The security peripherals may be hardware-configured to assist in the secure services performed by secure enclave. For example, the security peripherals may include: authentication hardware implementing various authentication techniques, encryption hardware configured to perform encryption, secure-interface controllers configured to communicate over the secure interface to other components, and/or other components. In some embodiments, secure enclave processor encrypts and/or decrypts authentication information communicated with an authentication subsystem and encrypts and/or decrypts information (such as tokens) communicated with a secure subsystem. Furthermore, secure enclave processor may compare authentication information with stored authentication and, if a match is obtained, may provide an encrypted token with an authentication-complete indicator to a secure element. A "secure enclave" might also be a data center installed in a room sufficiently isolated and/or protected to prevent any external threat, as a bunker, a buried room or an underwater room.

In the context of the present specification, a "client" may refer, but is not limited to, a client device, a client application or software, whether embedded on the same computer that comprises the secure enclave or embedded on a computer distant from the computer that comprises the secure enclave.

According to one embodiment, the method comprises the steps of, in response to receiving the query, requesting an external data base for collecting the data set on which the operation must be computed, supplying said collected data set to the secure enclave and storing said data set in the secure enclave.

According to this embodiment, the secure enclave acts as an interface between the client and the data provider database, this interface being therefore the sole access to the database through which the client can request the computation of said operation. As a variant, the secure enclave might include a data base in which said data set is stored.

According to one embodiment, the method comprises the followings steps:

    a. In response to receiving the request, obtaining client credentials from the client;
    b. Verifying client authorization to query the data set based on client credentials;
    c. In response to successful verification of client authorization, performing the steps of encrypting, computing and providing the results to the client.

The client credentials might comprise any credential containing authentication information certifying that the client is authorized to request information from the secure enclave, such as an identifier, a digital signature, a certificate or a token and/or any combination of these elements. The rules engine might comprise a predetermined list of client credentials authorized to query the data set and the verification step might be a comparison of the client credentials with said predetermined list. According to these features, the client has therefore to be enrolled with the secure enclave beforehand any request to a database associated with the secure enclave or stored in the secure enclave, so as to implement a zero-trust interface with the secure enclave. In other words, no client should be trusted by default.

According to one embodiment, the method furthermore comprises the step of, in response to receiving the request, obtaining client credentials from the client, wherein said privacy level is determined based on client credentials.

The client credentials might comprise an application identifier, a software development company identifier or a service provider identifier. The rules engine might comprise a predetermined list of client credentials, each associated with a predetermined privacy level and the determination step might be a selection in said list of the privacy level associated with said client credentials. In other words, each client being authorized to query the database shall be preliminary enrolled and a privacy level shall be beforehand set to this client.

The privacy level might be a numerical value set on a scale between a minimum value, for instance 0, corresponding to a 100% privacy level with which no individual information from the data set can leak from the request results, and a maximum value, for instance 100, correspond to a 0% privacy level where data from the data set are contained cleartext from the request results. This numerical value indicates a balance between the amount of information contained in the query results and needed by the client and the risk of disclosure of individual data in the query results.

According to one embodiment, the analysis key comprises a permutation matrix. In the context of the present specification, a permutation matrix is a square binary matrix that has exactly one entry of 1 in each row and each column and 0s elsewhere. The multiplication of this matrix by another matrix results therefore in a permutation of the values of the other matrix. Preferably, the dimensions of the permutation matrix equal the number of records of the data set. Each record of the dataset might have at least one attribute, and the encryption step might comprise a left-hand multiplication of said permutation matrix of the analysis key by a vector containing said attribute of each record of the data set.

It has been shown that any anonymization technique is based on data permutation, with optionally noise addition. It can be therefore inferred from this paradigm that two anonymization techniques can be compared to evaluate their performances, meaning the balance between the amount of information available from anonymized data sets obtained with these techniques and the risk of disclosure in these anonymized data sets, with comparing their permutation matrices. Reciprocally, starting from a wished performance, or in other words said privacy level, one can define an appropriate anonymization technique with determining its appropriate permutation matrix.

According to one embodiment, the data set comprises a plurality of records, each record having a plurality of attributes, and the analysis key comprises a plurality of permutation matrices, each permutation matrix being associated to one of the attributes, the number of permutation matrices of the analysis key being less or equal to the number of attributes of each record of the data set. If so, the encryption step might comprise a left-hand multiplication of each permutation matrix of the analysis key by a vector containing one of the attributes of each record of the data set. Each attribute might have a numerical value, a categorical value selected from a predetermined list of values, or a nominal value. Possibly, the number of permutation matrices of the analysis key might be defined based on the privacy level and/or based on the attributes, considering that some attributes might not necessarily be permuted. In the case that the number of permutation matrices is lower than the number of attributes, the analysis key might comprise identity matrices, with which vectors of attributes to be not permuted are left-hand multiplicated.

According to one embodiment, said or each permutation matrix is obtained by determining a permutation matrix defining permutation distances such as the value of at least one aggregative function computed with these permutation distances is distant from the value of the same aggregative function computed with permutation distances defined by a random permutation matrix by a value based on said privacy level.

More precisely, each permutation matrix might be equal to the left-hand multiplication of a first permutation matrix that sorts the associated attribute of the records of the data set in increasing order, a second permutation matrix for anonymizing the data and a third permutation matrix equal to the transpose of the first matrix. If so, the second permutation matrix might be determined according the above-cited method implying said aggregative function.

The aggregative function might be a power mean of said permutation distances, said permutation distances being absolute or relative permutation distances.

In an example, a permutation distance might be defined as a normalized absolute rank distance between the rank of an entry in an original matrix to be permuted and the rank of this entry in the permuted matrix resulting of the permutation of the original matrix by the permutation matrices. Said normalized absolute rank distance might be therefore computed with the following equation:

$$(1)\ z_{ij} = \frac{\left|r_{ij} - r'_{ij}\right|}{\max(r_{ij}, \ldots, r_{nj}) - 1}$$

where $r_{ij}$ is the rank of an entry, at row i and column j, in the original matrix, $r'_{ij}$ is the rank of this entry in the permuted matrix, and n is the number of rows in the original matrix. Row rank i might be the rank of each individual and row rank j might be the rank of each attribute.

An aggregative function, defined as a power mean of said normalized absolute rank distances, might be then computed with the following equation:

$$(2)\ P_\alpha = \frac{1}{n} \sum_{i=1}^{s} \left(\frac{1}{p} \sum_{j=1}^{q} (z_{ij})^\alpha\right)^\alpha,\ \forall \alpha \geq 0$$

where n is the number of rows in the original matrix, p is the number of columns in the original matrix, q the number of entries for each row that have been permuted by the permutation matrices and s the number of columns that contains at least an entry that has been permuted by a permutation matrix.

One can observe that, when $\alpha$ equals 0, $P_\alpha$ indicates a percentage of entries of the original matrix that have been permuted by the permutation matrices. In addition, when $\alpha$ equals 1, $P_\alpha$ indicates the average depth of permutations in the permuted matrix. In addition, when $\alpha$ equals 2, $P_\alpha$ indicates whether all the permuted entries have been altered the same way or not. Therefore, $P_\alpha$ allows an evaluation of the performance of the permutation matrices according to many indicators with varying the $\alpha$ parameter.

The value of the aggregative function for these permutation matrices can be compared to the value of the same aggregative function for a random permutation matrix. Such random permutation matrix, assuming it has been generated by a generator closest to a true random generator, achieve a one-time pad encryption, which offers the best privacy level, since it theoretically prevents any re-identification of an individual from the anonymized data set. The permutation matrices can be thus compared, objectively, with such random permutation matrix, considering that the narrower the difference between the values of the aggregative function is, the less an individual can be re-identified from an anonymized data set obtained with this permutation matrix. On the other hand, the broader the difference between the values of the aggregative function is, the more information can be derived from an anonymized data set obtained with this permutation matrix.

Reciprocally, each permutation matrix can be determined ex ante, from a predefined value of said difference. For example, such difference can be defined beforehand, based on said privacy level, such as the difference decreases as far the privacy level increases, and vice-versa. Each permutation matrix can be then composed from random block of smaller dimensions, centered and distributed along the main diagonal, the number of blocks and their dimensions being determined from said Po value. The broader the difference is, the higher the number of blocs is and the smaller their dimensions are. In other words, for the lowest value of said privacy level, the 1 entries are located close to the main diagonal, and each permutation matrix tends to be close to an identity matrix. On the contrary, the narrower the difference is, the lower the number of blocs is and the larger their dimensions are. Therefore, the higher the privacy level is, the more 1 entries are scattered from the main diagonal, in a random way, and each permutation matrix tends to be close to a random matrix.

According to another embodiment, the analysis key comprises a bistochastic matrix. In the context of the present specification, a bistochastic matrix is a square matrix of nonnegative real numbers, each of whose rows and columns sums to 1. Each record of the dataset might have at least one attribute, and the encryption step might comprise a left-hand multiplication of said bistochastic matrix of the analysis key by a vector containing said attribute of each record of the data set.

According to one embodiment, the data set stored in the secure enclave is at least partially encrypted with at least one cipher key defined beforehand, the encrypting step comprising the following steps:

    a. Providing said cipher key to the secure enclave,
    b. Decrypting, inside the secure enclave, said data set with said cipher key;
    c. Encrypting, inside the secure enclave, said decrypted data set with said analysis key.

These features help to prevent a re-identification of an individual from the encrypted data set in case of a breach in the database from which the data set is collected.

The data set might comprises a plurality of records, each record having a plurality of attributes, and the cipher key might comprise a plurality of permutation matrices, each permutation matrix being associated to one of the attributes, the number of permutation matrices of the cipher key being less or equal to the number of attributes of each record of the data set. If so, the decryption step might comprise a left-hand multiplication of the transpose of each permutation matrix of the cipher key by a vector containing one of the attributes of each record of the data set.

Individual identification attributes, as name, address and/or social security numbers, might be encrypted beforehand with a cryptographic function, as a hash function for instance. Other attributes, being therefore indirect identification attributes as city code or birth date, are permuted with said cipher key. Optionally, encrypted individual identification attributes might also be permuted with said cipher key.

Each permutation matrix of the cipher key might be equal to the left-hand multiplication of a first permutation matrix that sorts the associated attribute of the records of the data set in increasing order, a second permutation matrix for anonymizing the data and a third permutation matrix equal to the transpose of the first matrix. If so, the second permutation matrix might be a random permutation matrix, for instance generated by a true random generator or by a random generator passing a chi squared test. As explained hereinbefore, such permutation matrix allows a one-time pad encryption of the data set, preventing therefore any re-identification of an individual from the encrypted data set in case of a breach of the database.

Optionally, the decryption step with said cipher key and the encryption step with said analysis key might be operated in a single operation, for instance with computing a left-hand multiplication of the transposed cipher key and the analysis key.

Preferably, the computing step is followed by a further step of decrypting, inside the secure enclave, said encrypted data set with said analysis key and a further step of encrypting, inside the secure enclave, said data set with said cipher key.

According to one embodiment, said cipher key is stored in another secure enclave. This feature prevents the data provider to perform any illegitimate task on the encrypted data set, since he has no access to the cipher key.

According to one embodiment, the results providing step comprises the following steps:

a. Detecting whether the results infringe a predetermined policy;
b. In response to successful detection, filtering the results.

Even in the case that the client is authorized to query the database and his associated privacy level has been duly determined, it might be possible to infer some unauthorized individual data from the request results, for instance if the number of records involved in the results is low. In addition, the results might contain data, of which collection might be forbidden in the client country. According to an example, the predetermined policy might be a comparison of the number of records involved in the request results to a predetermined threshold. According to another example, the predetermined policy might be a comparison of the request results to a regulation of the client's country.

The subject of the invention is also a computer-implemented method for storing a data set in a database; wherein the data set comprises a plurality of records, each record having a plurality of attributes, the method comprising the following steps:

a. Providing an original data set to a secure enclave;
b. Determining a cipher key comprising a plurality of permutation matrices, each permutation matrix being associated to one of the attributes;
c. Encrypting, inside the secure enclave, said original data set with said cipher key;
d. Storing said crypted data set in the database;
e. Storing said cipher key in another secure enclave.

According to one embodiment, the crypted data set might be stored in a database external to the secure enclave or in a database included in the secure enclave.

The present invention will be better understood and other advantages will appear on reading the detailed description of an embodiment taken by way of non-limiting example and illustrated by the appended drawings, in which:

Figure 1 is a logic flow diagram that depicts a method for storing a data set in a database stored in a secure enclave, according to an embodiment of the invention;
Figure 2 shows a simplified block diagram of a computer executing the method shown in Figure 1;
Figure 3 shows an example of a cipher key that is used with executing the method of Figure 1;

Figure 4 is a flowchart of a ciphering according to one embodiment of the invention;
Figure 5 is a logic flow diagram that depicts a method for executing a request comprising at least one operation to be computed on a data set contained in a database stored in a secure enclave, according to an embodiment of the invention;
Figure 6 shows a simplified block diagram of a computer executing the method shown in Figure 5;
Figure 7 shows an example of a cipher key that is used with executing the method of Figure 1;
Figure 8 is a flowchart of the execution of an operation according to one embodiment of the invention;
Figure 9 shows a simplified block diagram of a computer executing a method for storing a data set in a database, according to another embodiment of the invention; and

Figure shows a simplified block diagram of a computer executing a method for executing a request comprising at least one operation to be computed on a data set contained in a database, according to an embodiment of the invention.

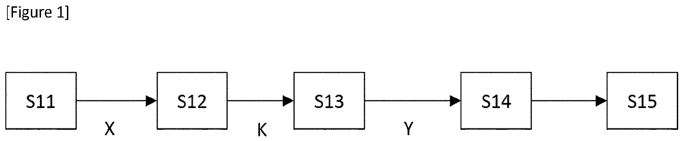

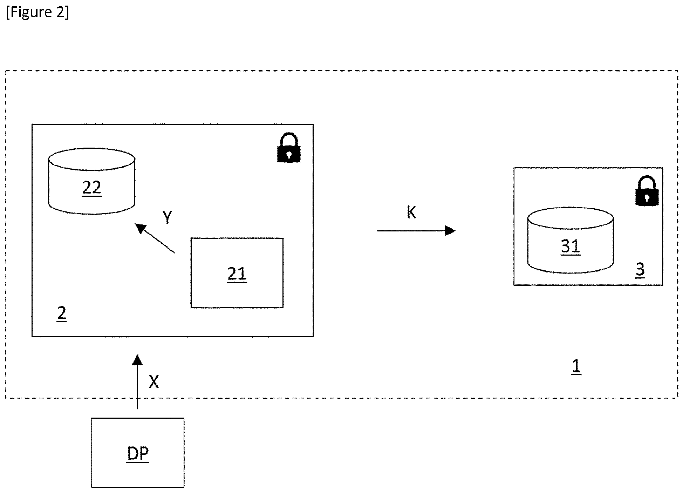

Reference is made to Figure 1 that shows a method for storing a data set in a database stored in a secure enclave. The method shown in Figure 1 is a computer-implemented method, that can be executed by a device 1 as shown in Figure 2.

The device 1 shown in this embodiment might be a smartphone or a server. It includes a first secure enclave 2 isolated from the rest of the device 1, which comprises a processor 21, a memory 22 and security peripherals (not shown) configured to execute authentication operations to grant, restrict or forbid a client access to the secure enclave and to achieve secure exchange of data between an authorized client and the secure enclave. The device 1 also comprises a second secure enclave 3, isolated from both the first secure enclave 2 and the rest of the device. The second secure enclave 3 comprises a memory 31.

It is proposed, with the method shown in Figure 1, to cipher and store a data set X provided by a data provider DP in a database stored in the memory 22 of the first secure enclave, in such a way that unauthorized access to personal information is prevented, that re-identification of individual in case of a data breach from the device 1 is prevented and that illegitimate tasks from the data provider on the data set is also prevented.

For this purpose, the method shown in Figure 1 comprises a first step S11 of providing an original data set X, supplied by a data provider DP, to the first secure enclave 2.

The original data set X comprises records of a plurality of individuals $I_1$ to $I_n$, each record comprising a plurality of attributes $C_1$ to $C_p$. The attributes might have numerical values, categorical values or nominal values. Some attributes might be direct identification attributes of individuals and shall be beforehand encrypted by the data supplier with a cryptographic function, as a hash function. For instance, attribute $C_1$ might be the name of an individual, encrypted with a SHA-1 function. Other attributes might be indirect identification attributes and can be therefore provided cleartext from the data supplier. One can not re-identify an individual from one of these attributes value taken alone, but one can re-identify the individual with combining several of these attributes and/or with computing correlations between several attributes. For instance, the attributes $C_2$ to $C_p$ might be birth dates or ages, genders, IP addresses, passenger name records, health data, voting records, consuming habits, location data.

The original data set might be therefore represented by a matrix of n rows and p columns, where a record $c_{ij}$ of this matrix is the value of the attribute $C_j$ for the individual $I_i$.

In a second step S12 of the method shown in Figure 1, a cipher key K is determined. The cipher key K might be determined by the processor 21 inside the first secure enclave 2 or by another processor outside the first secure enclave 2 with provides the cipher key K to the first secure enclave 2.

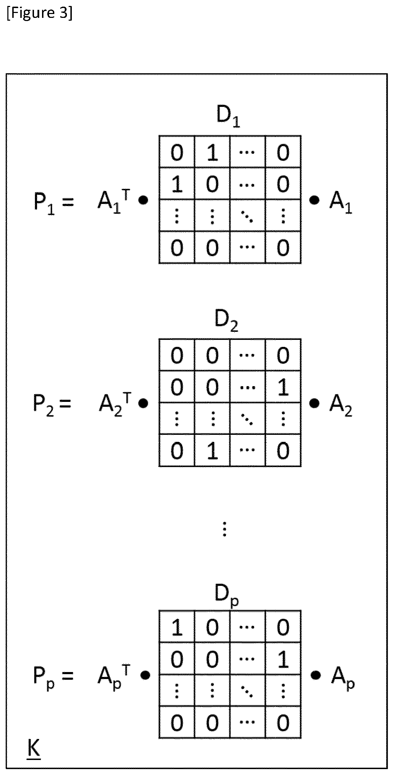

An example of a cipher key K that might be generated with second step S2 is shown in Figure 3. The cipher key K comprises a number p of permutation matrices $P_1$ to $P_p$, where a matrix $P_j$ is associated with an attribute $C_j$ of the data set X.

Each permutation matrix $P_j$ of the cipher key K is equal to a left-hand multiplication of a first permutation matrix $A_j$, a second matrix $D_j$ and the transpose of the first permutation matrix $A_j^T$ : $P_j = A_j^T \cdot D_j \cdot A_j$.

The first permutation matrix $A_j$ is intended to sort the records $c_{ij}$ of the attribute $C_j$ associated to the permutation matrix $P_j$ in a given order, for instance in an increasing order in case of numerical values for this attribute $C_j$. The first permutation matrix $A_j$ is thus determined considering the values of these records.

At least one of the second matrices $D_j$ is a random permutation matrix, generated by a random generator, as a true random generator. In an embodiment, some of the second matrices $D_j$ are random permutations matrices, the rest of the second matrices $D_j$ being identity matrices. For instance, only permutation matrices $P_j$ associated with indirect identification attributes might be determined from a second random permutation matrix, permutation matrices $P_j$ associated with direct identification attributes being determined from a second identify matrix. As a variant, all second permutations matrices $D_j$ are random permutations matrices.

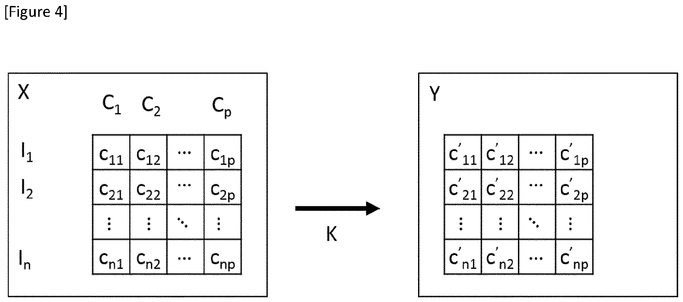

In a third step S13 shown in Figure 4, the original data set X is encrypted, inside the secure enclave 2, with the cipher key K.

The processor 2 executes a left-hand multiplication of each permutation matrix $P_j$ of the cipher key with a vector $X_j$ containing records $c_{ij}$ of the data set matrix X corresponding to the attribute $C_j$ associated with this permutation matrix $P_j$, for instance the row j of the data

set matrix : $Y_j = P_j \cdot X_j = A_j^T \cdot D_j \cdot A_j \cdot X_j$.

This vector is therefore first sorted by the first permutation matrix $A_j$, then either randomly permuted or unaltered by the second matrix $D_j$, depending on the type of this second matrix, and then sorted back in its initial order by the transpose of the first permutation matrix $A_j^T$.

Records $c_{ij}$ of attributes $C_j$ associated with permutation matrices $P_j$ determined from a random permutation are therefore permuted according to a one-time-pad method.

The results of these left-hand multiplications form a crypted data set Y, that might be represented by a matrix of n rows and p columns, where a record $c'_{ij}$ of this matrix is the altered value of the attribute $C_j$ for the individual Ii, and also an original value of the attribute $C_j$ for another individual.

In a forth step S14, the crypted data set Y is stored in a database stored in the memory 22 of the first secure enclave 2 and in a fifth step S15, the cipher key K is provided to the second secure enclave 3, where it is stored in the memory 31 of this second secure enclave 3.

The method described in Figure 1 therefore achieves an encryption of an original data set that prevents any re-identification of an individual from the crypted data set, thanks to the use of random permutation matrices, that prevents unauthorized access to personal information, thanks to the use of a secure enclave, and that prevent any illegitimate tasks from the data provider on the data set, thanks to the storing of the cipher key in a separate secure enclave.

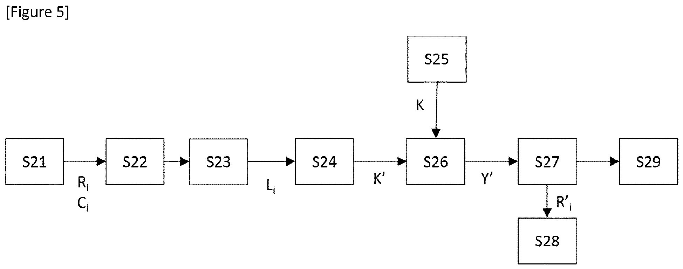

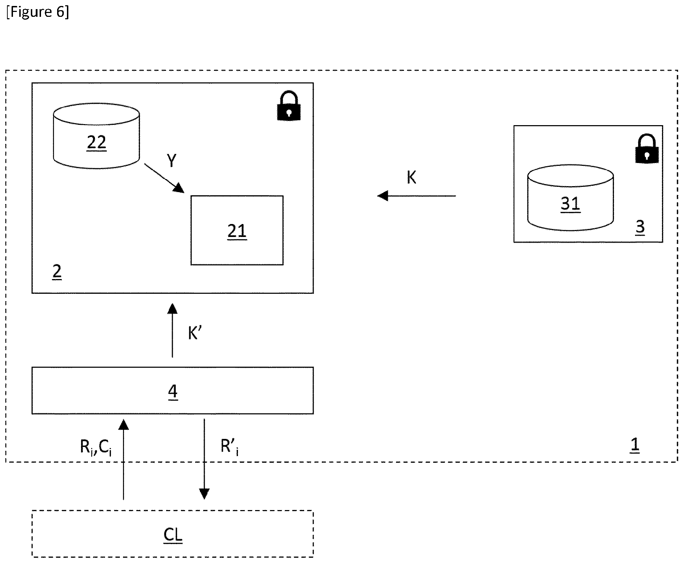

Reference is now made to Figure 5 that shows a method for executing a request $R_i$ emitted from a client CL and comprising at least an operation OP, on the crypted data set Y stored in the secure enclave 2. The method shown in Figure 5 is a computer-implemented method, that can be executed by the device 1 shown in Figure 6.

The client CL might be, in the embodiment of Figure 6, a client application or a client software requiring access to the crypted data set Y to execute the operation OP on it.

The device 1 now includes a rules engine 4, with which the client CL interacts and to which any request of access to the first secure enclave 2 shall be sent.

It is proposed, with the method shown in Figure 5, to execute the operation OP requested by the client CL on the crypted data set Y stored in the memory 22 of the first secure enclave 2, in such a way that only the appropriate level of information is provided to the client CL, considering its needs and its authorization.

In a first step S21, the request $R_i$ issued from the client CL is provided to the rules engine 4. Client credentials $C_i$ are also provided to the rules engine 4. In this embodiment, the client credentials $C_i$ comprises a digital signature of the client CL. The client CL has been enrolled beforehand with the rules engine 4 and the first secure enclave 2, and a digital signature has been granted to him, authenticating that the client CL is authorized to query the first secure enclave 2.

In a second step S22, the rules engine 4 checks whether the client CL is authorized to query the first secure enclave 2, based on the digital signature contained in the credentials $C_i$ of the client CL.

In the case where the client's digital signature can not be authenticated by the rules engine 4, the request $R_i$ is denied. The rules engine 4 implements therefore a zero-trust interface with the first secure enclave 2.

In case of a successful authentication of the client CL, the rules engine 4 determines, in a third step S23, a privacy level $L_i$ of the results of the operation OP that shall be contained in the answer to the request $R_i$. This privacy level $L_i$ is determined based on the client credentials $C_i$.

During the client enrollment, the client shall have expressed the level of information he needs in the results to any request that he might issue to the secure enclave. This level of information has been then transformed into a numerical value, comprised between 0 and 100. A value of 0 indicates that no individual information shall leak from the request results and a value of 100 indicates that all the individual information can be obtained, cleartext, from the request results. The numerical value has been then stored as a privacy level $L_i$ in the rules engine 4, with being associated to the client credentials $C_i$. When receiving the client credentials $C_i$, the rules engine 4 can recover the privacy level $L_i$ associated with this client.

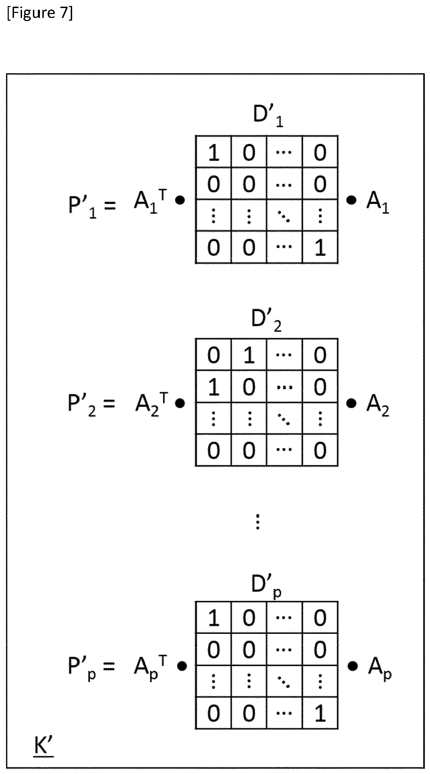

In a fourth step S24, the rules engine 4 determines an analysis key K' based on the privacy level $L_i$. An example of analysis key K' that might be generated with forth step S24 is shown in Figure 7.

The analysis key K' comprises a number p of permutation matrices $P'_1$ to $P'_p$, where a matrix $P'_j$ is associated with an attribute $C_j$ of the original data set X.

Each permutation matrix $P'_j$ of the analysis key K' is equal to a left-hand multiplication of the first permutation matrix $A_j$, a second matrix $D'_j$ and the transpose of the first permutation matrix $A_j^T$ : $P'_j = A_j^T \cdot D'_j \cdot A_j$.

The first permutation matrix $A_j$ is the first permutation matrix used in the cipher key K.

At least one of the second matrices $D'_j$ of the analysis key K' is a block diagonal matrix, where each main-diagonal block is a random permutation matrix and each off-diagonal block is a zero matrix. Each main-diagonal block might be generated by a random generator, as a true random generator. The number of main-diagonal blocks and the dimensions of each main-diagonal block are determined based on the privacy level $L_i$.

As a reminder, the privacy level $L_i$ indicates a balance between the amount of information that would be contained in the results of the operation OP requester by the client CL, predefined at the client enrollment, and the risk of disclosure of individua data in these results.

In a first embodiment of step S24, the rules engine 4 can thus derive, from the privacy level $L_i$, the value of an aggregative function computed from the permutation distances of a permutation matrix that should achieve such privacy level $L_i$. Such expected value might be obtained with computing the value of the same aggregative function, for instance, with equation (2) for a 0 value of $\alpha$, for a full random permutation matrix, and with defining, based on the privacy level $L_i$, the distance between said computed value and said expected value.

The rules engine 4 determines, from said distance between the computed value and the expected value, the number of main-diagonal blocks and the dimensions of each main-diagonal block of the said at least one second matrix $D'_j$. The broader the difference is, the higher the number of main-diagonal blocs is and the smaller the dimensions of each main-diagonal bloc are. Said at least one second matrix $D'_j$ tends to become close to an identity matrix. On the other hand, the narrower the difference is, the lower the number of main-diagonal blocs is and the larger the dimensions of each main-diagonal bloc are. Said at least one second matrix $D'_j$ tends to be close to a complete random matrix.

In another embodiment of step S24, a plurality of second matrices $D'_j$ have been computed beforehand, each second matrix achieving a value of the aggregative function corresponding to a value of the privacy level. After having determined the privacy level $L_i$, the rules engine can therefore select the predefined second matrix $D'_j$ which achieves the determined privacy level $L_i$.

In an embodiment, some of the second matrices $D'_j$ of the analysis key K' are permutations matrices computed with one of the above-cited methods, the rest of the second matrices $D'_j$ being identity matrices. As a variant, all second permutations matrices $D'_j$ are random permutations matrices. The number of second matrices $D'_j$ of the analysis key K' that shall be computed with one of the above-cited methods might be determined by the rules engine 4, based on the privacy level $L_i$ and the attributes $C_j$ on which the operation OP requested by the client CL should be executed.

At the end of the step S24, the analysis key K' is provided from the rules engine 4 to the first secure enclave 2.

In a fifth step S25, the cipher key K is provided from the second secure enclave 3 to the first secure enclave 2.

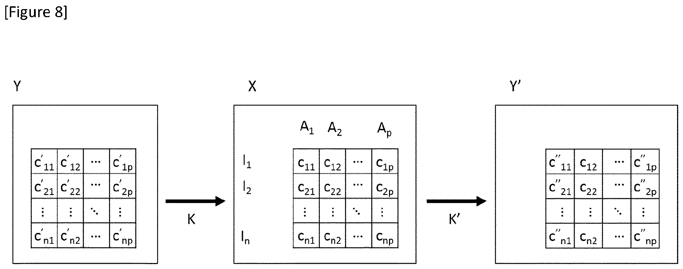

In a sixth step S26 shown in Figure 8, the processor 21 decrypts the crypted data set Y with the cipher key K and re-encrypts the decrypted data set X with the analysis key K'.

The processor 2 executes a left-hand multiplication of the transpose of each permutation matrix $P^T_j$ of the cipher key K with a vector containing records $c'_{ij}$ of the crypted data set matrix Y corresponding to the attribute $C_j$ associated with this permutation matrix $P_j$. The result of these multiplications is the original data set X : $X_j = P^T_j \cdot Y_j$.

The processor 2 then executes a left-hand multiplication of each permutation matrix $P'_j$ of the analysis key K' with a vector containing records $c_{ij}$ of the original

data set matrix X corresponding to the attribute $C_j$ associated with this permutation matrix $P'_j$ : $Y'_j = P'_j \cdot X_j = A_j^T \cdot D'_j \cdot A_j \cdot X_j$.

The results of these left-hand multiplications form a second crypted data set Y', that might be represented by a matrix of n rows and p columns, where a record $c''_{ij}$ of this matrix is the altered value of the attribute $C_j$ for the individual $I_i$, and also an original value of the attribute $C_j$ for another individual.

Compared to the crypted data set Y, some records of the original data set X might be not permuted in the second crypted data set Y'. Moreover, a record of the original data set X might be permuted, in the second crypted data set Y', with a record closer to him than in the crypted data set Y. Therefore, compared with the crypted data set Y, where the permutations are truly random, some information can be derived from the second crypted data set Y'.

In an embodiment of step S26, the processor 21 might computes a left-hand multiplication of each permutation matrix $P'_j$ of the analysis key K' with the transpose of the permutation matrix $P^T_j$ of the cipher key K associated with the same attribute $C_j$.

In a seventh step S27, the processor 21 executes the operation OP requested by the client CL on the second crypted data set Y'. This operation might comprise statistical operations, as the computation of means, standard deviations, probability distributions, correlation coefficients of records $c_{ij}$ of two or more attributes $C_j$. It might also comprise logical operations or mathematical operations or more complex operations combining two or more of the previous operations.

In an eight step S28, the results $R'_i$ of the operation OP is provided to the client CL, through the rules engine 4.

In a ninth step S29, the processor 21 decrypts the second crypted data set Y' with the analysis key K' and re-encrypts the decrypted data set X with the cipher key K'.

The method described in Figure 5 therefore achieves the execution of an operation requested by a client on a crypted data set with authorizing the leak of only an appropriate, necessary and sufficient level of information from the results.

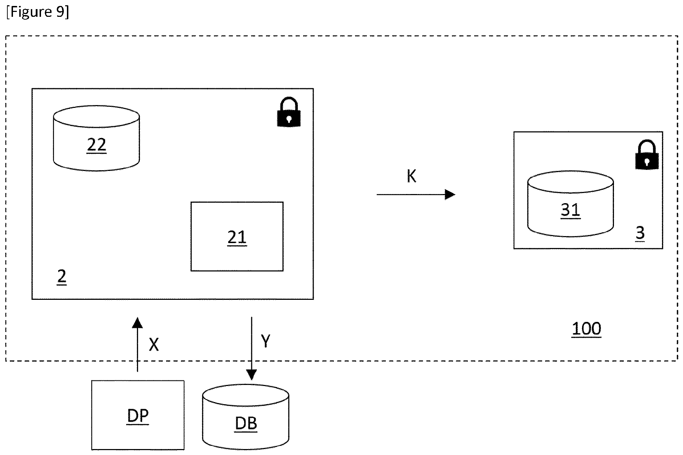

Reference is made to Figure 9 that shows a device 100 executing a method for storing a data set in a database DB of a data provider DP .

It is proposed, with this method, to cipher and store a data set X provided by a data provider DP in a database DB, through a secure enclave 2, in such a way that unauthorized access to personal information is prevented, that re-identification of individual in case of a data breach from the database DB is prevented and that illegitimate tasks from the data provider on the data set is also prevented.

The method executed by the device 100 is similar to the method disclosed at Figure 1 and Figure 2, except for the last steps. In this method, the crypted data set Y is supplied to an external database DB rather than being stored in a database stored in a memory of the secure enclave.

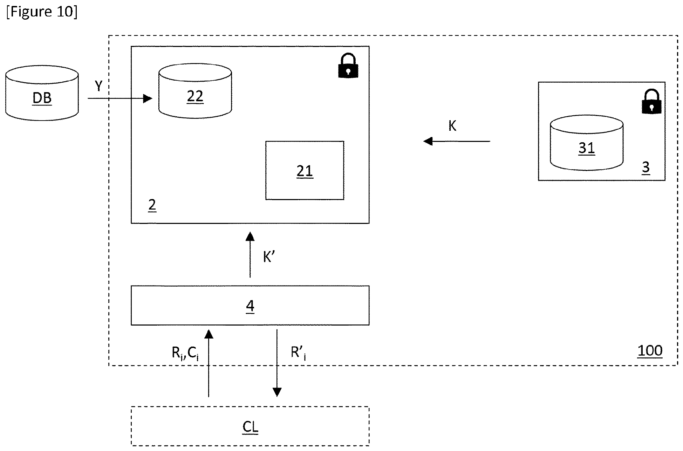

Reference is now made to Figure 10 that shows the device 100 executing a method for executing a request $R_i$ emitted from a client CL and comprising at least an operation OP, on the crypted data set Y stored in the database DB.

The method executed by the device 100 is similar to the method disclosed at Figure 5 and Figure 6, except that the method includes an intermediate step of requesting the external data base DB for collecting the crypted data set Y on which the operation OP must be computed. The crypted data set Y is thus stored in a memory 22 of the secure enclave, waiting for his processing. For instance, this intermediate step might be executed after the step of determining the privacy level.

The methods disclosed herein may also be implemented by software programs executable by a computer system. Further, implementations may include distributed processing and parallel processing, especially for processing in parallel several or all data in the data sets.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive, and the appended claims are intended to cover all such modifications, enhancements and other embodiments, which fall within the true spirit and scope of the description. Thus, the scope of the following claims is to be determined by the broadest permissible interpretation of the claims and their equivalents and shall not be restricted or limited by the foregoing description.

**Claims**

1. A computer-implemented method for executing a request ($R_i$) comprising at least one operation (OP) to be computed on a data set (Y) contained in a database (22, DB), the data set being stored in a secure enclave (2); the request being emitted from a client (CL), comprising the following steps:

    a. (S23) In response to receiving the request, determining a privacy level ($L_i$) of the request

results;

b. (S24) Determining an analysis key (K') based on said privacy level and providing the analysis key to the secure enclave;

c. (S26) Encrypting, inside the secure enclave, said data set with said analysis key;

d. (S27) Computing, inside the secure enclave, said at least one operation on said encrypted data set;

e. (S28) Providing to the client the results ($R'_i$) of the operation.

2. The method according to claim 1, furthermore comprising the followings steps:

a. (S21) In response to receiving the request ($R_i$), obtaining client credentials ($C_i$) from the client (CL);

b. (S22) Verifying client authorization to query the data set (Y) based on client credentials;

c. In response to successful verification of client authorization, performing the steps of encrypting (S26), computing (S27) and providing (S28) the results ($R'_i$) to the client.

3. The method according to one of the preceding claims, furthermore comprising the step of, in response to receiving the request ($R_i$), (S21) obtaining client credentials ($C_i$) from the client (CL), wherein said privacy level ($L_i$) is determined based on client credentials.

4. The method according to one of the preceding claims, wherein the analysis key (K') comprises a permutation matrix ($P'_i$).

5. The method according to the preceding claim, wherein the data set (Y) comprises a plurality of records ($c'_{ij}$), each record having a plurality of attributes ($C_j$), and wherein the analysis key (K') comprises a plurality of permutation matrices ($P'_j$), each permutation matrix being associated to one of the attributes, the number of permutation matrices of the analysis key being less or equal to the number of attributes of each record of the data set.

6. The method according to the claims 4 or 5, wherein said or each permutation matrix ($P'_j$) is obtained by determining a permutation matrix defining permutation distances ($z'_{ij}$) such as the value of at least one aggregative function ($P_\alpha$) computed with these permutation distances is distant from the value of the same aggregative function computed with permutation distances defined by a random permutation matrix by a value based on said privacy level ($L_i$).

7. The method according to one of the preceding claims, wherein the data set (Y) stored in the secure enclave (2) is at least partially encrypted with at least one cipher key (K) defined beforehand, the encrypting step comprising the following steps:

a. (S25) Providing said cipher key to the secure enclave,

b. (S26) Decrypting, inside the secure enclave, said data set with said cipher key;

c. (S26) Encrypting, inside the secure enclave, said decrypted data set with said analysis key (K').

8. The method according to the preceding claim, wherein said cipher key (K) is stored in another secure enclave (3).

9. The method according to one of the preceding claims, wherein the results providing step (S28) comprises the following steps:

a. Detecting whether the results ($R'_i$) infringe a predetermined policy;

b. In response to successful detection, filtering the results.

10. A computer-implemented method for storing a data set (Y) in a database; wherein the data set comprises a plurality of records ($c'_{ij}$), each record having a plurality of attributes ($C_j$), the method comprising the following steps:

a. (S11) Providing an original data set (X) to a secure enclave (2);

b. (S12) Determining a cipher key (K) comprising a plurality of permutation matrices ($P_j$), each permutation matrix being associated to one of the attributes;

c. (S13) Encrypting, inside the secure enclave, said original data set with said cipher key;

d. (S14) Storing said crypted data set in the database (22, DB);

e. (S15) Storing said cipher key in another secure enclave (3).

[Figure 1]

| S11 | → (X) | S12 | → (K) | S13 | → (Y) | S14 | → | S15 |

[Figure 2]

[Figure 3]

[Figure 4]

[Figure 5]

[Figure 6]

[Figure 7]

$$D'_1$$

| 1 | 0 | $\cdots$ | 0 |
|---|---|----------|---|
| 0 | 0 | $\cdots$ | 0 |
| $\vdots$ | $\vdots$ | $\ddots$ | $\vdots$ |
| 0 | 0 | $\cdots$ | 1 |

$$P'_1 = \quad A_1^{\mathsf{T}} \bullet \qquad \bullet A_1$$

$$D'_2$$

| 0 | 1 | $\cdots$ | 0 |
|---|---|----------|---|
| 1 | 0 | $\cdots$ | 0 |
| $\vdots$ | $\vdots$ | $\ddots$ | $\vdots$ |
| 0 | 0 | $\cdots$ | 0 |

$$P'_2 = \quad A_2^{\mathsf{T}} \bullet \qquad \bullet A_2$$

$$\vdots$$

$$D'_p$$

| 1 | 0 | $\cdots$ | 0 |
|---|---|----------|---|
| 0 | 0 | $\cdots$ | 0 |
| $\vdots$ | $\vdots$ | $\ddots$ | $\vdots$ |
| 0 | 0 | $\cdots$ | 1 |

$$P'_p = \quad A_p^{\mathsf{T}} \bullet \qquad \bullet A_p$$

<u>K'</u>

[Figure 8]

[Figure 9]

[Figure 10]

**Europäisches Patentamt**
**European Patent Office**
**Office européen des brevets**

# EUROPEAN SEARCH REPORT

Application Number

EP 21 18 8535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUIZ NICOLAS: "A General Cipher for Individual Data Anonymization", INTERNATIONAL JOURNAL OF UNCERTAINTY, FUZZINESS ANDKNOWLEDGE-BASED SYSTEMS., vol. 28, no. 05, 1 October 2020 (2020-10-01), pages 727-756, XP055877513, SG ISSN: 0218-4885, DOI: 10.1142/S0218488520500312 Retrieved from the Internet: URL:https://arxiv.org/ftp/arxiv/papers/1712/1712.02557.pdf> * page 3 * * page 17 * * page 18 * * Sections 3.1 and 4.1 * ----- | 1-10 | INV. G06F21/62 G06F21/74 |
| A | US 2019/147188 A1 (BENALOH JOSH D [US] ET AL) 16 May 2019 (2019-05-16) * the whole document * ----- | 1-10 | |

TECHNICAL FIELDS SEARCHED (IPC)

G06F

The present search report has been drawn up for all claims

| Place of search | Date of completion of the search | Examiner |
|---|---|---|
| Munich | 13 January 2022 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 8535

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2022

| Patent document cited in search report | Publication date | Patent family member(s) | Publication date |
|---|---|---|---|
| US 2019147188 A1 | 16-05-2019 | NONE | |

EPO FORM P0459

For more details about this annex : see Official Journal of the European Patent Office, No. 12/82